Europäisches Patentamt

European Patent Office

Office européen des brevets

(11) Publication number: **0 447 933 A1**

# EUROPEAN PATENT APPLICATION

(21) Application number: 91103805.7

(51) Int. Cl.5: **H04N 5/76, G11B 31/00**

(22) Date of filing: **13.03.91**

(30) Priority: **20.03.90 DE 4008967**

(43) Date of publication of application:
**25.09.91 Bulletin 91/39**

(84) Designated Contracting States:
**AT BE CH DE DK ES FR GB GR IT LI LU NL SE**

(71) Applicant: **DEUTSCHE THOMSON-BRANDT GMBH**

**W-7730 Villingen-Schwenningen(DE)**

(72) Inventor: **Geiger, Erich, Dipl.-Ing.**
**Panoramaweg 19**
**W-7731 Unterkirnach 100(DE)**

(74) Representative: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

(54) Communication system for color television signals.

(57) In a communication device which is designed with a colour-television set and a further separate set such as a VTR at least, various signals like data for command controlling of the separate sets, RGB, video and audio and signals which are fed from antenna are processed. For this the separate sets are interconnected with pluggable cables.

The invention is that cables (3, 31-36) which are plugged in the aerial terminals of the sets (1, 7, 8, 9, 10) are used for data transfers between the sets (1, 7, 8, 9, 10). Therefore no individual cables for data signals are needed.

Preferably for remote controlled domestic communication devices with one remote control.

Fig. 1

Commercially available color television receiver devices are equipped with a multipole connection socket, in particular with a peritelevision connection according to publication source DIN EN 50049, also called a SCART socket, which has separate contacts not only for a CVBS signal (i.e., the composite video signal including blanking components) but also for the primary color signals red (R), green (G), blue (B) besides contacts for synchronizing signals and control signals. It is desirable to use television receivers for a communication system together with further connected electronic devices. These demands can be partly met by the known SCART connections, however, such SCART connections are not available on all devices. Therefore, additional contacts besides the associated lines are necessary for these devices in order to fulfil the named requirements.

It is the object of the invention to create a communication system without additional contacts and wires.

This task is solved according to the invention by the features given in claim 1. Further developments of the invention are distinguished in the subclaims.

An embodiment example for a closer explanation of the invention is described in the following by means of the drawings. These show in:

Fig. 1     a communication system according to the invention,

Fig. 2     a further development

Fig. 3     shows an example of an incoming supply of data signals.

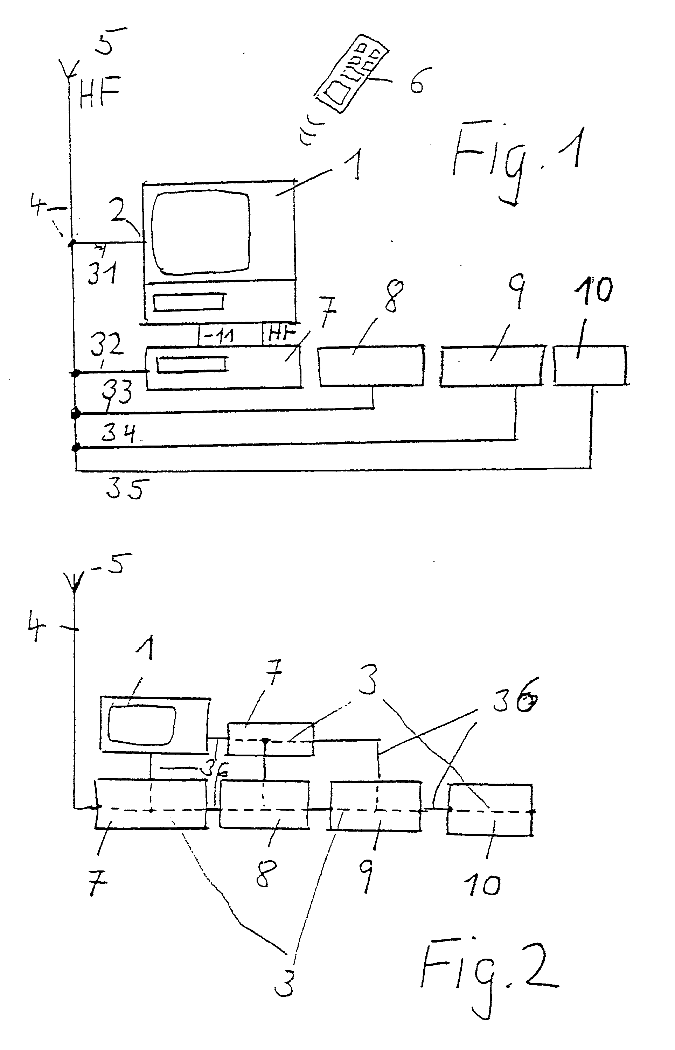

A communication system with a television receiver 1 which has a connector, for example an aerial socket, for the connection of input lines 31 through 35 for a cable connection 4 and/or an aerial 5 is shown in Fig. 1. The television receiver 1 can be operated remotely and/or programmed in a known way by means of a remote control facility 6, in particular via an infrared path. The television receiver 1 serves simultaneously as a monitor for a video recorder 7 and/or a picture disc player 8 and/or for a recorder for rerecordable discs 9 and/or a system of audio devices 10.

Some of these devices contain inputs for the reception of high frequency radio transmissions; others, like the picture disc player 8, are provided for the output of high frequency signals, for example, to the television receiver 1. The devices 1, 7, 8, 9, 10 are designed to be communicating with each other. Hereby, high frequency signals are fed in via the known high frequency line 31 through 35 and video frequency television signals like luminance or chrominance signals via the SCART connection 11. To save further lines, the remote control facility 6 is so formed that it can, alone or in connection with other installations, simultaneously or alternately remotely operate or program several devices 1, 7, 8, 9, 10. The remote control 6 or the direct operation at the devices can influence a single device or several devices. For this purpose, the devices 1, 7, 8, 9, 10 are connected with each other for the control signals via wires 31 through 35. The high frequency lined 31 through 35, which at the same time form the connection of the devices between each other and which also receive and/or output the high frequency information, serve as line or BUS for the control signals, which can consist of direct and/or low frequency voltages or currents and/or pulse shaped data. The system can be simplified by means of several HE connection possibilities at the devices for the parallel connection of several other devices of the communication system.

Fig. 2 shows a further devlopment of Fig. 1 in which a high frequency line 3 is fed through the devices and serves, with high frequency component lines 36, as the connection between the devices for the transmission of the control signals and/or high frequency signals and/or data.

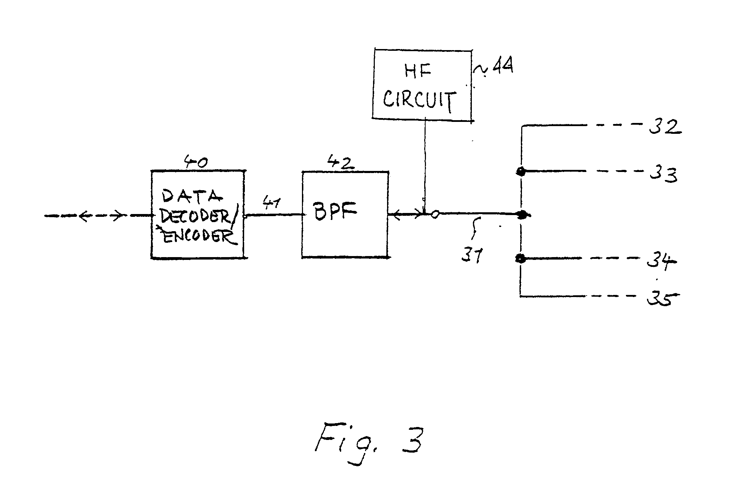

Fig. 3 shows a possibility for the feeding in of data signals. A bidirectional data signal line 41 of the respective communication means 40 within the devices 1, 7, 8, 9, 10 is respectively connected in series with (followed by) a band pass 42 for the data signals. Communications menas 40 comprises a data decoder and/or a data encoder, depending on the whether the respective device only receivers control data and/or tranmits data. The respective communication facility 40 of the devices 1, 7, 8, 9, 10 is electrically connected with the high frequency lines 31 through 35 via the band pass 42. A high frequency processing circuit 44, comprising, e.g., a tuner or modulator depending on the respective device, is also connected to the high frequency line within the device.

The Figures 1 through 3 are representations showing the principle. Preferably, means for the adaptation (adjustment) of the impedance and/or the level are associated to the signal branching points of the high frequency lines 3, 31 through 36.

## Claims

1. Communication system between electronic devices, in particular television receiving devices and video recorders or similar, **characterized in that**

   a) devices (1, 7, 8, 9, 10) of the communication system have connections for lines (3, 31 through 36) for the transmission of signals to a device and/or between devices,

   b) means for the introduction or derivation of direct and/or low frequency voltages or currents and/or pulse shaped data are allocated to the connections or the lines (3, 31 through 36) or other existing lines,

c) the direct and/or low frequency voltages or currents and/or data serve for the transmission of switching and/or control functions in the communication system.

2. Communication system according to claim 1, **characterized in that** the switching and/or control functions can be operated and/or adjusted by means of one or several remote controls and one or several operating functions of the devices (1, 7, 8, 9, 10).

3. Communication system according to claim 1 or 2, **characterized in that** devices (1, 7, 8, 9, 10) are each equipped with several HE connection points.

4. Communication system according to one of the claims 1, 2 or 3, **characterized in that** the signals are video and/or audio signals transmitted directly and/or moduled or encrypted on high frequency waves.

Fig. 1

Fig. 2

Fig. 3

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 204 754 (RCA LICENSING CORPORATION) <br> * page 5, line 15 - page 7, line 2; figure 1 * <br> – – – | 1-4 | H 04 N 5/76 <br> G 11 B 31/00 |
| A | US-A-4 821 032 (KEIICHIRO SHIMADA) <br> * column 1, lines 26 - 51; figure 1 * <br> – – – – – | 1-4 | |

TECHNICAL FIELDS SEARCHED (Int. Cl.5)

H 04 N 7/00
G 11 B 31/00

The present search report has been drawn up for all claims

| Place of search | Date of completion of search | Examiner |
|---|---|---|
| Berlin | 14 June 91 | DUDLEY C. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document